# EUROPÄISCHE PATENTSCHRIFT

(11) **EP 2 198 695 B1**
(45) Veröffentlichungstag und Bekanntmachung des Hinweises auf die Patenterteilung: **18.04.2012**
(21) Anmeldenummer: 09015286.9
(22) Anmeldetag: 10.12.2009
(51) Int. Cl.: A01G 23/00, A01G 23/093, A01G 23/081, B65B 13/20, B65B 27/10

(54) **Vorrichtung zum Bündeln von Holz und Verfahren zum Betrieb einer solchen Vorrichtung**
Device for forming bundles of wood and method for operating such a device
Dispositif de liaison de bois et procédé de fonctionnement d'un tel dispositif

(30) Priorität: 18.12.2008 DE 102008063523
(43) Veröffentlichungstag der Anmeldung: 23.06.2010
(73) Patentinhaber: Viessmann Werke GmbH & Co. KG, 35107 Allendorf (DE)
(72) Erfinder: Döhrer, Karl, 34474 Diemelstadt (DE)
(74) Vertreter: Wolf, Michael

(56) Entgegenhaltungen:
- WO-A1-01/87049
- WO-A1-92/14350
- GB-A- 2 357 417
- SE-C2- 511 379
- US-A- 4 399 745

## Beschreibung

Die Erfindung betrifft eine Vorrichtung zum Bündeln von Holz gemäß dem Oberbegriff des Patentanspruchs 1 und ein Verfahren zum Betrieb einer solchen Vorrichtung gemäß dem Patentanspruch 14.

Eine Vorrichtung der eingangs genannten Art ist nach der US 4,633,776 A bekannt. Diese Vorrichtung umfasst einen Aufnahmeraum für das zu bündelnde Holz, dem einerseits während des Betriebs der Vorrichtung das zu bündelnde Holz kontinuierlich zuführbar und dem andererseits eine Bündel- und Fördereinrichtung zugeordnet ist, wobei der Bündel- und Fördereinrichtung zum Zertrennen des strangförmigen Bündels aus Holz eine Sägeeinrichtung nachgeschaltet ist (Spalte 1, Zeile 57).

Der Erfindung liegt die Aufgabe zugrunde, eine Vorrichtung der eingangs genannten Art zu verbessern.

Diese Aufgabe ist mit einer Vorrichtung der eingangs genannten Art durch die im Kennzeichen des Patentanspruchs 1 aufgeführten Merkmale gelöst.

Nach der Erfindung ist also vorgesehen, dass die Bündel- und Fördereinrichtung während des Zertrennens des Bündels mittels der in Förderrichtung gesehen ortsfest an der Vorrichtung angeordneten Sägeeinrichtung ausschaltbar ausgebildet ist.

Mit anderen Worten kann erfindungsgemäß auf eine so genannte "fliegende" Sägeeinrichtung verzichtet werden, also eine Säge, die sich während des Zertrennens des Bündels wegen der kontinuierlich arbeitenden Bündel- und Fördereinrichtung parallel zum Strang bewegen muss. Verfahrensmäßig ist dementsprechend vorgesehen, dass die Bündel- und Fördereinrichtung während des Zertrennens des Bündels mittels der in Förderrichtung gesehen ortsfest an der Vorrichtung angeordneten Sägeeinrichtung ausgeschaltet wird.

Andere vorteilhafte Weiterbildungen der erfindungsgemäßen Vorrichtung ergeben sich aus den abhängigen Patentansprüchen.

Die erfindungsgemäße Vorrichtung einschließlich ihrer vorteilhaften Weiterbildungen wird nachfolgend anhand der zeichnerischen Darstellung eines bevorzugten Ausführungsbeispiels näher erläutert.

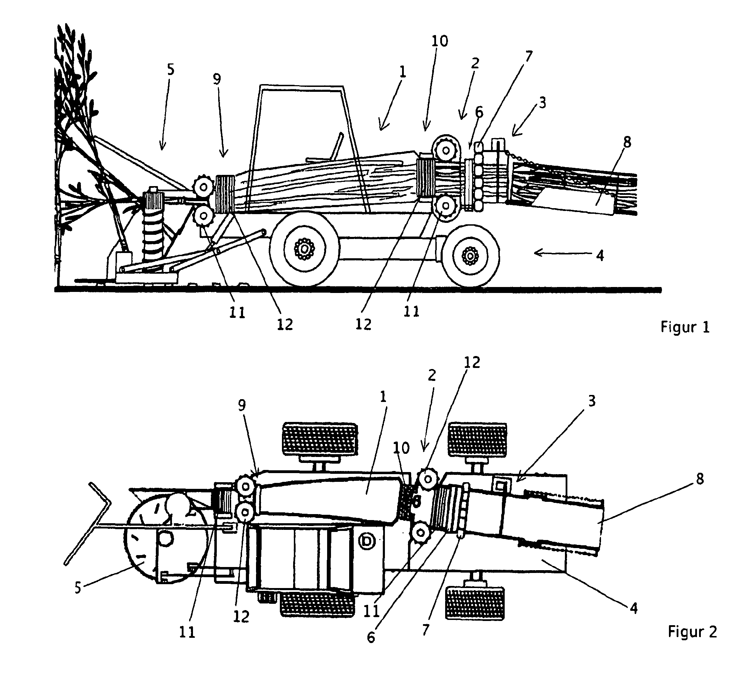

Es zeigt
- Figur 1: in Seitenansicht die auf einem Fahrgestell angeord- nete, erfindungsgemäße Vorrichtung zum Bündeln von Holz; und
- Figur 2: in Draufsicht die Vorrichtung gemäß Figur 1.

Die in den Figuren dargestellte Vorrichtung zum Bündeln von Holz, die hier auf einem Fahrgestell 4 angeordnet ist, besteht in bekannter Weise aus einem Aufnahmeraum 1 für das zu bündelnde Holz, dem einerseits während des Betriebs der Vorrichtung das zu bündelnde Holz kontinuierlich zugeführt wird und dem andererseits eine Bündel- und Fördereinrichtung 2 zugeordnet ist, wobei der Bündel- und Fördereinrichtung 2 zum Zertrennen des strangförmigen Bündels aus Holz eine Sägeeinrichtung 3 nachgeschaltet ist.

Wesentlich für die erfindungsgemäße Vorrichtung ist nun, dass die Bündel- und Fördereinrichtung 2 während des Zertrennens des Bündels mittels der in Förderrichtung gesehen ortsfest an der Vorrichtung angeordneten Sägeeinrichtung 3 ausschaltbar ausgebildet ist bzw. dass die Bündel- und Fördereinrichtung 2 während des Zertrennens des Bündels mittels der in Förderrichtung gesehen ortsfest an der Vorrichtung angeordneten Sägeeinrichtung 3 ausgeschaltet wird, und zwar bei gleichzeitiger, ununterbrochener Zufuhr von Holz zum Aufnahmeraum 1.

Diese Maßgabe hat vorteilhaft zur Folge, dass die Sägeeinrichtung 3 in Förderrichtung gesehen ortsfest an der Vorrichtung montierbar und eine so genannte "fliegende" Sägeeinrichtung verzichtbar ist.

Dabei ist zur Gewährleistung eines kontinuierlichen Bündelvorgangs vorgesehen, dass die Sägeeinrichtung 3 in Abhängigkeit vom Füllstand des Aufnahmeraums 1 betätigt wird bzw. dass das Zertrennen des Bündels bei noch unvollständig mit Holz befüllten Aufnahmeraum 1 erfolgt. Diese Maßgabe gewährleistet, dass die Bündel- und Fördereinrichtung 2 zum Zertrennen des Bündels angehalten werden kann, gleichzeitig aber die Zufuhr von Holz zum Aufnahmeraum 1 nicht unterbrochen werden muss. Dazu ist am Aufnahmeraum 1 ein geeigneter Füllstandssensor vorgesehen, der mit einer Regelung verbunden ist, die u. a. auch die Bewegung der Bündel- und Fördereinrichtung 2 regelt. Darüber hinaus wird, was noch genauer erläutert wird, nur dann gesägt, wenn eine eingestellte Zahl von Seilbindungen (Maß für die Länge des Bündels) erreicht ist.

Wie aus den Figuren ersichtlich, ist der Vorrichtung eine Einrichtung zum Ernten dünner, stängeliger Holzgewächse 5 vorgeschaltet. Mit dieser und mit Verweis darauf, dass die Vorrichtung auf einem Fahrgestell 4 angeordnet ist, ist es möglich, die Ernte als kontinuierlichen Vorgang zu betreiben: Zunächst werden die Bäumchen mit der dem Fahrzeug vorangestellten Einrichtung 5 abgeschnitten, dann über geeignete Fördereinrichtungen in den Aufnahmeraum 1 verbracht, von dort mittels der Bündel- und Fördereinrichtung 2 der Sägeeinrichtung 3 zugeführt, entsprechend abgelängt und hinter dem Fahrzeug zum Aufsammeln abgeworfen. Dazu ist der Sägeeinrichtung 3, die vorzugsweise als Kappsäge ausgebildet ist, eine in Förderrichtung gesehen vorzugsweise nach hinten/unten geneigte Rutsche 8 nachgeschaltet, die aufgrund ihrer Neigung gleichzeitig auch den Sägevorgang erleichtert.

Darüber hinaus ist vorgesehen, dass zwischen der Bündel- und Fördereinrichtung 2 und der Sägeeinrichtung 3 eine in Förderrichtung gesehen ortsfeste vorzugsweise hydraulisch betätigbare Zangeneinrichtung 6 angeordnet ist, die dazu dient, das Bündel während des Zertrennens zu fixieren.

Weiterhin ist zwischen der Bündel- und Fördereinrichtung 2 und der Sägeeinrichtung 3 eine in Förderrichtung gesehen ortsfeste Bindeeinrichtung 7 (auch Bindewickeleinrichtung genannt) angeordnet, wobei diese einen Wickelmechanismus umfasst, dessen Drehzahl in Abhängigkeit vom Vorschub der Bündel- und Fördereinrichtung 2 einstellbar ausgebildet ist. Bei angehaltener Bündel- und Fördereinrichtung 2 umkreist dabei die Bindeeinrichtung 7 das Bündel, und zwar mit einer einstellbaren maximalen Drehzahl und Umschlingungszahl. Ist letztere erreicht, wird die Bündel- und Fördereinrichtung 2 wieder eingeschaltet, wobei die tatsächliche Vorschubgeschwindigkeit in Abhängigkeit vom Füllstand des Aufnahmeraums 1 geregelt wird. Der dazu erforderliche Füllstandssensor wird mittels der Regelung auch dazu benutzt, um die Drehzahl der Bindeeinrichtung 7 während des Vorschubs zu regeln, so dass sich eine schraubenlinienförmige Umschlingung des Bündels ergibt. Nach einer vorgegebenen Vorschubstrecke wird die Bündel- und Fördereinrichtung 2 erneut angehalten und der Wickelvorgang wird wieder gestartet. Während der schnellen Umschlingung des Bündels durch die Bindeeinrichtung 7 wird das Bündel neben dem sich bildenden Seilstrang auch direkt durch die bereits erwähnte Zangeneinrichtung 6 zusätzlich zusammengepresst.

Bezüglich des Aufnahmeraums 1 ist vorgesehen, dass dieser eine Zu- und eine Abfuhröffnung 9, 10 für das zu bündelnde Holz aufweist. Zwischen diesen beiden Öffnungen ist der Aufnahmeraum 1 kanalförmig ausgebildet, wobei sich seine Querschnittsfläche in Förderrichtung gesehen vorzugsweise vergrößert, um nachgefördertes Holz gut aufnehmen zu können.

Um das abgeschnittene Holz innerhalb der Vorrichtung bewegen zu können, sind an der Zu- und der Abfuhröffnung 9, 10 Ele-mente zum Fördern des Holzes angeordnet, wobei die an der Abfuhröffnung 10 angeordneten Elemente zum Fördern des Holzes als Teil der Bündel- und Fördereinrichtung 2 ausgebildet sind. Mit Verweis auf die Figuren ist weiterhin vorgesehen, dass die Elemente zum Fördern des Holzes aus zwei Walzenpaaren 11, 12 bestehen, wobei ein Walzenpaar 11 eine horizontal und das andere Walzenpaar 12 eine vertikal verlaufende Walzenachse aufweist und wobei die vorzugsweise hydraulisch angetriebenen Walzen der Walzenpaare 11, 12 zueinander verstellbar ausgebildet sind.

Im einzelnen und nochmals mit anderen Worten ausgedrückt, funktioniert die erfindungsgemäße Vorrichtung wie folgt:

Die Erfindung betrifft insbesondere das Zusammenspiel eines auf einem Fahrgestell montierten Mähwerks (Einrichtung zum Ernten dünner, stängeliger Holzgewächse 5) und eines Press- und Bindeapparats für Schwachholz (Sägeeinrichtung 3, Zangeneinrichtung 6 und Bindeeinrichtung 7) mit einem Stauraum (Aufnahmeraum 1). Durch den Stauraum, der im Normalbetrieb nicht gänzlich gefüllt ist, ist es möglich, die Presswalzen (Walzenpaar 11, 12) während der Fahrt und somit gleichzeitigen Zuflusses von dünnen Bäumen kurz anzuhalten, damit die Zange (Zangeneinrichtung 6) den Materialstrang an der Bindestelle fest zusammenpressen, der Bindeapparat (Bindeeinrichtung 7) durch Rotation um das Holzbündel einen Seilstrang binden und die Kappsäge (Sägeeinrichtung 3) nach jeweils mehreren Seilstrangbildungen das fertige Bündel abtrennen kann. Während des Stopps der Presswalzen füllt sich der Stauraum über das normale Maß hinaus. Durch die Erfindung ist es, wie beschrieben, möglich, auf eine "fliegende" Zangen-, Binde- und Kappsägeeinheit zu verzichten.

Das Pressen erfolgt durch zwei horizontale und zwei vertikale Presswalzen (Walzenpaar 11, 12). Die obere, horizontale Walze kann nach oben ausweichen. In der unteren Lage gibt sie eine etwa 45 cm hohe Öffnung zur unteren Walze frei; in der obersten Stellung beträgt die Öffnung etwa 85 cm. Die beiden senkrechten Walzen (Walzenpaar 12) sind pendelnd und federbeaufschlagt gelagert. Bei leerem Presskanal (Aufnahmeraum 1) beträgt die lichte Weite zwischen den Walzen etwa 40 cm, bei maximaler Öffnung etwa 80 cm. Alle Walzen werden vorzugsweise hydraulisch angetrieben.

Die Vorschubgeschwindigkeit wird über die Stellung der oberen, horizontalen Walze geregelt. Von der untersten Walzenposition bis etwa 75% der maximalen Öffnungsweite ist die Vorschubgeschwindigkeit nur sehr gering; von der Position 75% bis zur maximalen Öffnung steigt die Vorschubgeschwindigkeit progressiv bis zum Maximum an. Ab 85% bis 100% der maximalen Öffnungsweite wird dies dem Fahrer mit schneller werdendem Signalton angezeigt, damit er die Fahrgeschwindigkeit entsprechend regeln kann.

Während des sehr schnellen Bindevorgangs (Rotation der Bindeeinrichtung 7) wird der Vorschub der Presswalzen (Walzenpaar 11, 12) kurz angehalten, die nachfließenden Stämmchen stauen sich im Stauraum (Aufnahmeraum 1) und füllen ihn über das normale Maß hinaus.

Um ein Wiederauflockern des Pressstrangs vor dem Binden zu verhindern, ist zwischen dem Presskanal (zwischen den Walzenpaaren 11, 12) und dem Binde- (Wickel-) Apparat (Bindeeinrichtung 7) eine hydraulische Zange (Zangeneinrichtung 6) angebracht, die den Materialstrang während des Bindevorgangs zusätzlich zusammenpresst und an der Bindestelle aus dem rechteckigen Materialstrang ein weitgehend rundes Bündel formt.

Die hydraulisch arbeitende Zange schließt unmittelbar nach dem Anhalten des Vorschubs. Direkt danach setzt der schnelle Binde-(Wickel-) Vorgang ein. Nach vier bis sechs Umschlingungen verlangsamt der Bindeapparat (Bindeeinrichtung 7) seine Rotation abrupt, die Zange öffnet, der Vorschub setzt ein, und zwar in seiner Geschwindigkeit abhängig von der Position der oberen, horizontalen Walze.

Während des Vorschubs rotiert die Binde- (Wickel-) Einrichtung mit reduzierter Umdrehungszahl um das Materialbündel. Die reduzierte Umdrehungszahl ist abhängig von der Vorschubgeschwindigkeit und somit von der Position der oberen, horizontalen Walze. Nach jeweils etwa 60 cm wird der Vorschub erneut angehalten, die hydraulische Zange schließt und die Binde- (Wickel-) Einrichtung beginnt abrupt mit schneller Rotation und formt einen vier bis sechs litzigen Seilstrang.

Aus der Zahl der Wickel- (Binde-) Vorgänge und dem Abstand der Seilstränge ergibt sich die Bündellänge (Mehrfaches von 60 cm zwischen 3 m und 4,8 m).

Nach fünf bis acht schnellen Wickelvorgängen / Seilsträngen (einstellbar) beginnt noch während des letzten Wickelvorgangs die etwa 30 cm (entspricht halben Abstand zweier Seilstränge) hinter dem Wickelapparat positionierte, sehr schnelle Kappsäge (Sägeeinrichtung 3) mit dem Trennschnitt. Durch die etwas nach unten abgewinkelte Rutsche 8 wird der Trennschnitt erleichtert. Der Vorschub kann erst wieder einsetzen, wenn die Säge nach dem Erreichen der untersten Stellung erneut in ihre obere Ruheposition zurückgekehrt ist. Beim Kappschnitt wird auch das Bindeseil durchtrennt.

Die während der Fahrt / während des Mähvorgangs zwangsläufig kontinuierliche Zuführung dünner Bäumchen erfordert es im Prinzip, dass auch die Presswalzen kontinuierlich fördern. Damit die Zange schließen, der Bindeapparat einen Seilstrang bilden und die Kappsäge schneiden kann, wäre es dementsprechend erforderlich, Zange, Bindeapparat und Kappsäge so zu montieren, dass sie während ihrer Funktion mit dem Materialstrang mitwandern und nach Abschluss des Binde- bzw. Sägevorgangs schnell wieder in ihre Ausgangsposition zurückkehren.

Aufgrund der beschriebenen Erfindung kann auf die "fliegende" Montage von Zange, Bindeapparat und Kappsäge verzichtet werden. Die Maschine wird dadurch kürzer, leichter und kostengünstiger. Dabei erlaubt es die entsprechend der Position der oberen, horizontalen Presswalze geregelte Fließgeschwindigkeit des Materialstrangs, den Stauraum immer nur so weit zu füllen, dass einerseits genügend Raum für die Unterbringung der während des Pressstillstands einfließenden Stämmchen bleibt, andererseits aber ein Bündel nahe am maximal möglichen Durchmesser geformt wird.

Abschließend zusammengefasst betrifft die Erfindung also einen Mähbündler für dünne Bäumchen, wobei die schnell und kontinuierlich in einen Stauraum einfließenden und sich dort stauenden dünnen Bäume den Stauraum pressenseitig als Holzstrang mit einer Geschwindigkeit verlassen, die vom Füllgrad an der Ausgangsseite des Stauraums, abgetastet von einer der Presswalzen, gesteuert wird. Die Vorschubgeschwindigkeit wird so eingestellt, dass bei kontinuierlichem Pressen der Stauraum nicht gänzlich gefüllt ist. Dabei werden während des Bindevorgangs und während des Betriebs der Kappsäge die Presswalzen angehalten, so dass sich in den Stauraum vor den Presswalzen einfließende dünne Bäumchen zusätzlich im Stauraum stauen.

### Bezugszeichenliste

- 1: Aufnahmeraum
- 2: Bündel- und Fördereinrichtung
- 3: Sägeeinrichtung
- 4: Fahrgestell
- 5: Einrichtung zum Ernten dünner, stängeliger Holzgewächse
- 6: Zangeneinrichtung
- 7: Bindeeinrichtung
- 8: Rutsche
- 9: Zufuhröffnung
- 10: Abfuhröffnung
- 11: Walzenpaar
- 12: Walzenpaar

## Patentansprüche

1. Vorrichtung zum Bündeln von Holz, umfassend einen Aufnahmeraum (1) für das zu bündelnde Holz, dem einerseits während des Betriebs der Vorrichtung das zu bündelnde Holz kontinuierlich zuführbar und dem andererseits eine Bündel- und Fördereinrichtung (2) zugeordnet ist, wobei der Bündel- und Fördereinrichtung (2) zum Zertrennen des strangförmigen Bündels aus Holz eine Sägeeinrichtung (3) nachgeschaltet ist,
**dadurch gekennzeichnet,**
**dass** die Bündel- und Fördereinrichtung (2) während des Zertrennens des Bündels mittels der in Förderrichtung gesehen ortsfest an der Vorrichtung angeordneten Sägeeinrichtung (3) ausschaltbar ausgebildet ist.

2. Vorrichtung nach Anspruch 1,
**dadurch gekennzeichnet,**
**dass** die Vorrichtung auf einem Fahrgestell (4) angeordnet ist.

3. Vorrichtung nach Anspruch 1 oder 2,
**dadurch gekennzeichnet,**
**dass** der Vorrichtung eine Einrichtung zum Ernten dünner, stängeliger Holzgewächse (5) vorgeschaltet ist.

4. Vorrichtung nach einem der Ansprüche 1 bis 3,
**dadurch gekennzeichnet,**
**dass** zwischen der Bündel- und Fördereinrichtung (2) und der Sägeeinrichtung (3) eine in Förderrichtung gesehen ortsfeste vorzugsweise hydraulisch betätigbare Zangeneinrichtung (6) angeordnet ist.

5. Vorrichtung nach einem der Ansprüche 1 bis 4,
**dadurch gekennzeichnet,**
**dass** zwischen der Bündel- und Fördereinrichtung (2) und der Sägeeinrichtung (3) eine in Förderrichtung gesehen ortsfeste Bindeeinrichtung (7) angeordnet ist.

6. Vorrichtung nach Anspruch 5,
**dadurch gekennzeichnet,**
**dass** die Bindeeinrichtung (7) einen Wickelmechanismus umfasst, dessen Drehzahl in Abhängigkeit vom Vorschub der Bündel- und Fördereinrichtung (2) einstellbar ausgebildet ist.

7. Vorrichtung nach einem der Ansprüche 1 bis 6,
**dadurch gekennzeichnet,**
**dass** der Sägeeinrichtung (3), die vorzugsweise als Kappsäge ausgebildet ist, eine in Förderrichtung vorzugsweise nach unten geneigte Rutsche (8) nachgeschaltet ist.

8. Vorrichtung nach einem der Ansprüche 1 bis 7,
**dadurch gekennzeichnet,**
**dass** der Aufnahmeraum (1) eine Zu- und eine Abfuhröffnung (9, 10) für das zu bündelnde Holz aufweist.

9. Vorrichtung nach Anspruch 8,
**dadurch gekennzeichnet,**
**dass** der Aufnahmeraum (1) zwischen der Zu- und Abfuhröffnung (9, 10) kanalförmig ausgebildet ist.

10. Vorrichtung nach Anspruch 8 oder 9,
**dadurch gekennzeichnet,**
**dass** wahlweise an der Zu- und/oder der Abfuhröffnung (9, 10) Elemente zum Fördern des Holzes angeordnet sind.

11. Vorrichtung nach Anspruch 10,
**dadurch gekennzeichnet,**
**dass** die an der Abfuhröffnung (10) angeordneten Elemente zum Fördern des Holzes als Teil der Bündel- und Fördereinrichtung (2) ausgebildet sind.

12. Vorrichtung nach Anspruch 10 oder 11,
**dadurch gekennzeichnet,**
**dass** die Elemente zum Fördern des Holzes aus zwei Walzenpaaren (11, 12) bestehen, wobei ein Walzenpaar (11) eine horizontal und das andere Walzenpaar (12) eine vertikal verlaufende Walzenachse aufweist.

13. Vorrichtung nach Anspruch 12,
**dadurch gekennzeichnet,**
**dass** die vorzugsweise hydraulisch angetriebenen Walzen des Walzenpaares (11, 12) zueinander verstellbar ausgebildet sind.

14. Verfahren zum Betrieb einer Vorrichtung nach einem der Ansprüche 1 bis 13,
**dadurch gekennzeichnet,**
**dass** die Bündel- und Fördereinrichtung (2) während des Zertrennens des Bündels mittels der in Förderrichtung gesehen ortsfest an der Vorrichtung angeordneten Sägeeinrichtung (3) ausgeschaltet wird.

15. Verfahren nach Anspruch 14,
**dadurch gekennzeichnet,**
**dass** das Zertrennen des Bündels bei noch unvollständig mit Holz befüllten Aufnahmeraum (1) erfolgt.

## Claims

1. A device for bundling wood, comprising a receiving chamber (1) for the wood to be bundled, to which the wood to be bundled can be supplied continuously during the operation of the device, on the one hand, and to which a bundling and conveyor apparatus (2) is assigned, on the other hand, a sawing apparatus (3) being connected downstream from the bundling and conveyor apparatus (2) to split the stringy bundle of wood,
**characterized in that**
the bundling and conveyor apparatus (2) is implemented as deactivatable during the splitting of the bundle by means of the sawing apparatus (3), which is arranged fixed in place on the device viewed in the conveyor direction.

2. The device according to Claim 1,
**characterized in that**
the device is arranged on an undercarriage (4).

3. The device according to Claim 1 or 2,
**characterized in that**
an apparatus for harvesting thin, stalky woody plants (5) is connected upstream from the device.

4. The device according to one of Claims 1 to 3,
**characterized in that**
a claw apparatus (6), which is fixed in location viewed in the conveyor direction and is preferably hydraulically operable, is arranged between the bundling and conveyor apparatus (2) and the sawing apparatus (3).

5. The device according to one of Claims 1 to 4,
**characterized in that**
a binding apparatus (7), which is fixed in place viewed in the conveyor direction, is arranged between the bundling and conveyor apparatus (2) and the sawing apparatus (3).

6. The device according to Claim 5,
**characterized in that**
the binding apparatus (7) comprises a winding mechanism, whose speed is implemented as adjustable as a function of the advance of the bundling and conveyor apparatus (2).

7. The device according to one of Claims 1 to 6,
**characterized in that**
a slide (8), which is preferably inclined downward in the conveyor direction, is connected downstream from the sawing apparatus (3), which is preferably implemented as a chop saw.

8. The device according to one of Claims 1 to 7,
**characterized in that**
the receiving chamber (1) has a supply opening and a removal opening (9, 10) for the wood to be bundled.

9. The device according to Claim 8,
**characterized in that**
the receiving chamber (1) is implemented in the form of a channel between the supply and removal openings (9, 10).

10. The device according to Claim 8 or 9,
**characterized in that**
elements for conveying the wood are alternately arranged on the supply opening and/or the removal opening (9, 10).

11. The device according to Claim 10,
**characterized in that**
the elements for conveying the wood, which are arranged on the removal opening (10), are implemented as part of the bundling and conveyor apparatus (2).

12. The device according to Claim 10 or 11,
**characterized in that**
the elements for conveying the wood consist of two roller pairs (11, 12), one roller pair (11) having a horizontally extending roller axis and the other roller pair (12) having a vertically extending roller axis.

13. The device according to Claim 12,
**characterized in that**
the preferably hydraulically driven rollers of the roller pair (11, 12) are implemented as adjustable to one another.

14. A method for operating a device according to one of Claims 1 to 13,
**characterized in that**
the bundling and conveyor apparatus (2) is deactivated during the splitting of the bundle by means of the sawing apparatus (3), which is arranged fixed in place on the device viewed in the conveyor direction.

15. The method according to Claim 14,
**characterized in that**
the splitting of the bundle is performed when the receiving chamber (1) is still not completely filled with wood.

## Revendications

1. Dispositif pour fagoter du bois, comprenant un espace de réception (1) pour le bois à fagoter, auquel est amené en continu le bois à fagoter pendant le fonctionnement du dispositif d'une part, et auquel un dispositif de fagotage et de transport (2) est attribué d'autre part, sachant qu'un dispositif de scie (3) pour séparer le fagot de bois en forme de faisceau, est disposé en aval du dispositif de fagotage et de transport (2),
**caractérisé en ce que**
le dispositif de fagotage et de transport (2) est formé en pouvant être mis hors service pendant la séparation du fagot au moyen du dispositif de scie (3) disposé de manière fixe sur le dispositif, vu dans le sens de transport.

2. Dispositif selon la revendication 1,
**caractérisé en ce que**
le dispositif est disposé sur un châssis (4).

3. Dispositif selon la revendication 1 ou 2,
**caractérisé en ce**
**qu'**un appareillage pour récolter des plantes ligneuses (5) fines en forme de tiges est disposé en amont du dispositif.

4. Dispositif selon l'une des revendications 1 à 3,
**caractérisé en ce**
**qu'**un dispositif de pince (6) pouvant être de préférence actionné de manière hydraulique est positionné de manière fixe, vu dans le sens de transport, entre le dispositif de fagotage et de transport (2) et le dispositif de scie (3).

5. Dispositif selon l'une des revendications 1 à 4,
**caractérisé en ce**
**qu'**un dispositif d'attache (7) est positionné de manière fixe, vu dans le sens de transport, entre le dispositif de fagotage et de transport (2) et le dispositif de scie (3).

6. Dispositif selon la revendication 5,
**caractérisé en ce que**
le dispositif d'attache (7) comprend un mécanisme d'enroulement dont le régime peut être réglé en fonction de l'avancement du dispositif de fagotage et de transport (2).

7. Dispositif selon l'une des revendications 1 à 6,
**caractérisé en ce**
**qu'**un glissoir (8) de préférence incliné vers le bas dans le sens de transport est monté en aval du dispositif de scie (3) qui est formé de préférence en tant que scie à onglet radiale.

8. Dispositif selon l'une des revendications 1 à 7,
**caractérisé en ce que**
l'espace de réception (1) présente une ouverture d'amenée et d'évacuation (9, 10) pour le bois à fagoter.

9. Dispositif selon la revendication 8,
**caractérisé en ce que**
l'espace de réception (1) entre l'ouverture d'amenée et d'évacuation (9, 10) est en forme de canal.

10. Dispositif selon la revendication 8 ou 9,
**caractérisé en ce que**
des éléments pour transporter le bois sont disposés au choix sur l'ouverture d'amenée et/ou d'évacuation (9, 10).

11. Dispositif selon la revendication 10,
**caractérisé en ce que** les éléments pour transporter le bois disposés sur l'ouverture d'évacuation (10) sont formés en tant que partie du dispositif de fagotage et de transport (2).

12. Dispositif selon la revendication 10 ou 11,
**caractérisé en ce que**
les éléments pour transporter le bois sont composés de deux paires de rouleaux (11, 12), sachant qu'une paire de rouleaux (11) présente un axe de rouleau horizontal et l'autre paire de rouleaux (12) un axe de rouleau vertical.

13. Dispositif selon la revendication 12,
**caractérisé en ce que**
les rouleaux de la paire de rouleaux (11, 12) entraînés de préférence de manière hydraulique sont formés en étant réglables l'un par rapport à l'autre.

14. Procédé pour le fonctionnement d'un dispositif selon l'une des revendications 1 à 13,
**caractérisé en ce que**
le dispositif de fagotage et de transport (2) est mis hors service pendant la séparation du fagot au moyen du dispositif de scie (3) disposé de manière fixe sur le dispositif, vu dans le sens de transport.

15. Procédé selon la revendication 14,
**caractérisé en ce que**
la séparation du fagot s'effectue alors que l'espace de réception (1) n'est pas encore complètement rempli de bois.
